# EUROPEAN PATENT APPLICATION

(11) **EP 1 698 421 A2**
(43) Date of publication of application: **06.09.2006**
(21) Application number: 06003935.1
(22) Date of filing: 27.02.2006
(51) Int. Cl.: B23K 9/133, B65H 59/04

(54) **Retainer for welding wire container**

(30) Priority: 04.03.2005 DE 102005010016
(71) Applicant: SIDERGAS Spa, 37010 S. Ambrogio di Valpolicella (IT)
(72) Inventor: Gelmetti, Carlo, 37017 Lazise (Verona) (IT)
(74) Representative: Sties, Jochen

(57) **Abstract**

The invention relates to a retainer (28) for a welding wire container, having a plate-like body (30) and at least three spacing elements (32) which protrude from the body on one side so as to prevent the entire surface of the body from contacting a welding wire coil. Further, the invention relates to a retainer for a welding wire container, having a frame formed from a plurality of -like segments, at least three of the segments being arranged in a common plane and contacting an upper surface of a welding wire coil.

## Description

The invention relates to a retainer for a welding wire container.

EP 0 636 098 shows a welding wire container in which a welding wire coil is arranged. In order to prevent the wire of the coil from becoming entangled when the wire is withdrawn from the container, a retainer is provided which is arranged on top of the coil. Basically, the retainer is formed as a plate which rests on top of the welding wire coil. Due to its weight, the retainer prevents the individual turns of the wire from overlapping and forming tangles so that the wire can be withdrawn from the container without interruptions.

Sometimes the combination of the retainer weight and a rough welding wire surface can lead to high friction which results in two wire strands exiting at the same time, which results in tangling.

Another problem exists when the majority of the welding wire has been withdrawn from the container. The wire exits from under the retainer at a sharp angle. Further, due to the weight of the retainer and the attrition between the retainer and the wire, a high traction force is necessary for withdrawing the wire from under the retainer. This traction force in combination with the sharp angle may result in the wire being bent, which can negatively affect the weld as such. A welding wire which is bent and accordingly cannot be fed straight to a welding machine causes wandering of the welding torch tip, resulting in missing of what is called "true tool point" or weld joint.

Accordingly, the object of the invention is to improve the known retainers so that the wire can be withdrawn from the container with reduced traction forces.

To this end, the invention provides a retainer which has a plate-like body and at least three spacing elements which protrude from the body on one side so as to prevent the entire surface of the body from contacting a welding wire coil. The invention is based on the idea of reducing the surface area of the retainer which contacts the wire. It could surprisingly be discovered that reducing the area of contact between the wire and the container results in a reduced traction force being necessary for withdrawing the wire from the container. This is surprising as theoretically, the friction between two elements is independent from the area of the contact surface; a reduced surface results in an increased pressure per unit of surface area so that the resulting friction should constant. This however does not apply when the friction between a wire coil and the retainer is looked at, as could be discovered.

Preferably, the spacing elements are in the form of ribs formed on the underside of the plate. The ribs provide a precisely defined contact between the welding wire coil and the retainer, this contact being sufficient for preventing the wire from becoming entangled.

The ribs preferably extend straight in an approximately radial direction so that they extend across the welding wire coil. The ribs can be arranged in pairs with the ribs of each pair being parallel or almost parallel to each other, for example arranged in a radial direction. The ribs can for example be arranged on either side of a cut-out which is provided in the retainer for engaging a reinforcement member of the container. As such cut-out usually is arranged in a corner of the retainer, the spacing elements are preferably arranged in the vicinity of the corners of the retainer. However, the retainer must not have a polygonal outer contour. The inventive spacing elements can also be used with round retainers.

The inventive spacing can also be achieved with a retainer formed by a metal or plastic frame were the three or more ribs besides serving as joining elements for the frame are also the direct contact points with the wire coil.

According to a preferred embodiment, the radially inner end of the rib are curved, in particular in the unwinding direction of the welding wire. This results in the wire being able to be withdrawn from the underside of the retainer very smoothly.

According to an alternative embodiment, the spacing elements are defined between recessed portions of the body or grooves in the body. It is not necessary that the spacing elements cover only a very small proportion of the surface area of the plate, as this is the case with ribs. Rather, the advantageous effects of the spacing elements can also be achieved with a retainer which can be considered as formed from a plate having recessed portions. Between the recessed portions, raised portions remain which form the spacing elements and contribute to the reduction of attrition between the retainer and the welding wire.

Preferably, the plate-like body is made from plastic, with the spacing elements being formed integrally with the body. This allows to manufacture the retainer at low costs.

The invention will now be described with reference to two embodiments which are shown in the enclosed drawings. In the drawings,
- Figure 1 shows a first type of a welding wire container with a retainer according to a first embodiment of the invention;
- Figure 2 shows a cross section through the welding wire container of Figure 1;
- Figure 3 shows a second type of a welding wire container with a retainer according to a first embodiment of the invention;
- Figure 4 shows a retainer according to a second embodiment of the invention;
- Figure 5 shows a retainer according to a third embodiment of the invention;
- Figure 6 shows a cross section along plane VI-VI of Figure 5;
- Figure 7 shows a retainer according to a fourth embodiment of the invention; and
- Figure 8 shows a cross section along plane VIII-VIII of Figure 7.

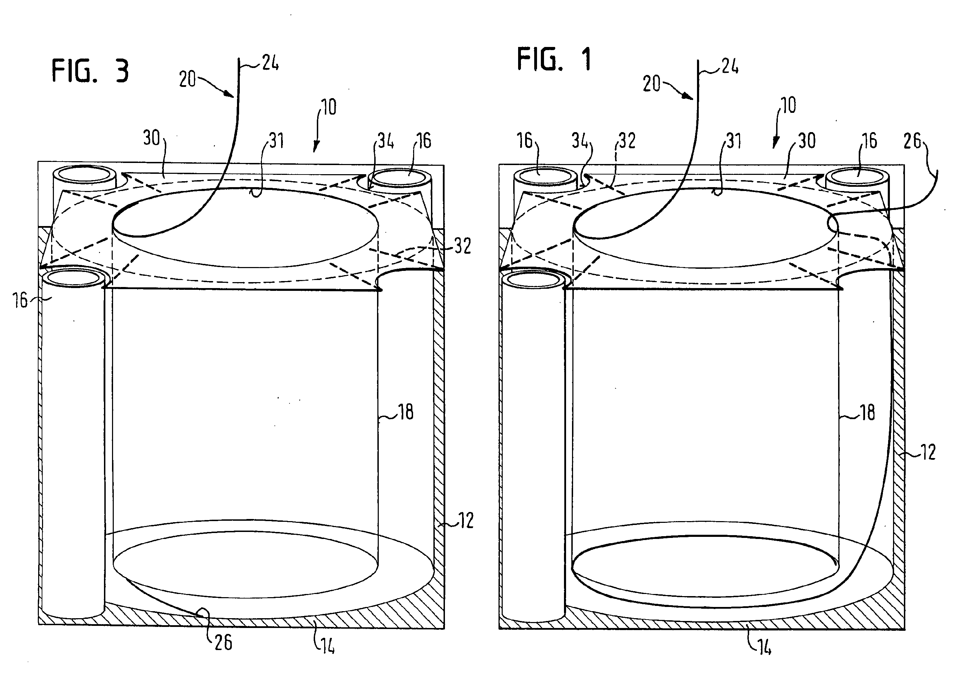

In Figure 1, a welding wire container 10 is shown. The container has a rectangular cross section and has side walls 12 and a bottom 14. In each corner, a reinforcement element 16 is arranged. In the interior of the container, a welding wire coil 18 is accommodated. The welding wire coil 18 consists of a certain amount of welding wire 20 which is coiled so as to form a hollow body with a ring-shaped cross section. The beginning of the welding wire is designated with reference numeral 24, and the end portion of the welding wire is designated with reference numeral 26.

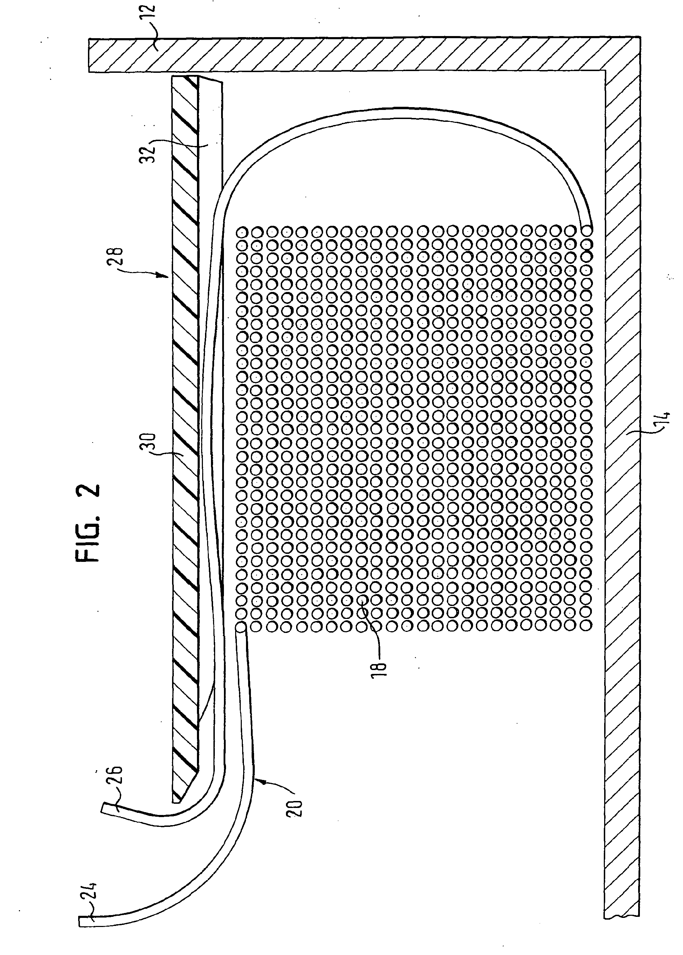

On the upper side of the welding wire coil 18, a retainer 28 is provided. Retainer 28 has a plate-like body 30 (please see Figure 2) with a central opening 31. The plate-like body 30 is provided on its underside, which is the side which is facing the welding wire coil, with a plurality of ribs 32. The ribs 32 are arranged in pairs, with the ribs of each pair being arranged on either side of a cut-out 34 which is provided for each of the reinforcement elements 16. The ribs are arranged approximately in a radial direction. At their radially inner end, the height of each rib decreases so that a smooth transition into body 30 is achieved.

The ribs 32 act as spacing elements which prevent that the entire surface of the body 30 of the retainer contacts the welding wire coil. As can be seen in Figure 2, it is only the ribs which contact the welding wire coil; body 30 as such does not contact the welding wire coil. The beginning 24 of the welding wire is withdrawn from the upper side of the welding wire coil from the upper most layer which is held in a correct order by the pressure exerted by the ribs of the retainer. Due to the ribs, the friction occurring between the welding wire and the retainer is very low.

The end portion 26 of the welding wire emerging from the bottom side is guided along the outer side of the coil, then between the upper side of the coil and the retainer and exits the container through the central opening 31. Due to the ribs, the end portion 26 of the welding wire can be passed through a space between the upper side of the coil and the body of the retainer without there being the risk of interference with the beginning of the welding wire which is withdrawn from the upper layer.

Body 30 together with the ribs 32 is molded in one piece from plastics. This results in a retainer which has a light weight and a good resistance to wear, so that the retainer can be re-used many times.

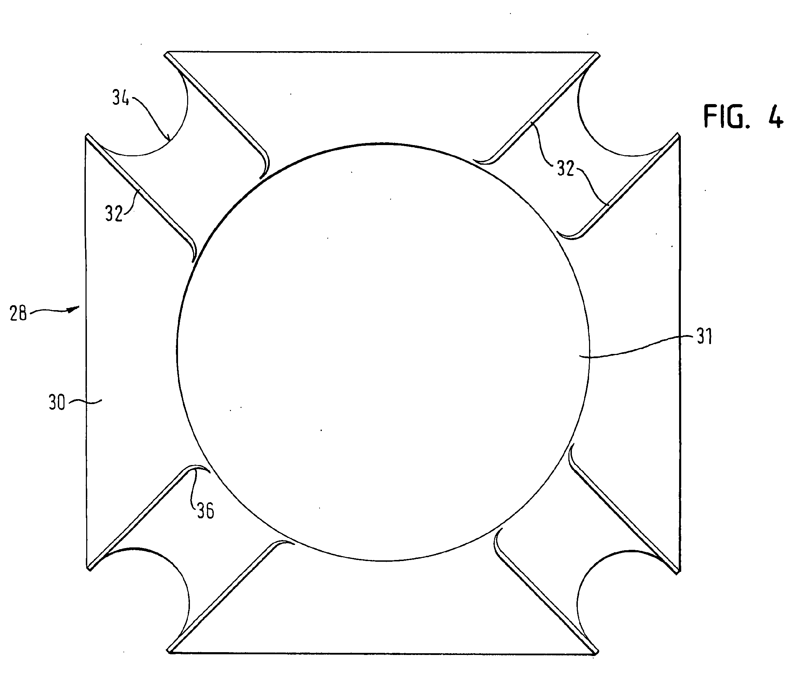

In Figure 3, another type of container 10 is shown. Unlike the container shown in Figure 1, the welding wire end portion 26 is not fed to the outside of the container which allows to connect it to a subsequent container in order to be able to work without interruptions, but ends at the bottom of the welding wire coil. Nevertheless, the container benefits from the spacing elements on the underside of the retainer as it reduces the friction between the retainer and the welding wire withdrawn from under the retainer.

In Figure 4, a second embodiment of the retainer is shown. In contrast to the retainer of the first embodiment, the inner ends 36 of the ribs are curved. The direction of curvature is the same as the unwinding direction of the welding wire. At each curved end, the height of each rib decreases to that a smooth transition into body 30 is achieved. Using curved ends of the ribs results in smoother withdrawal of the welding wire from the container.

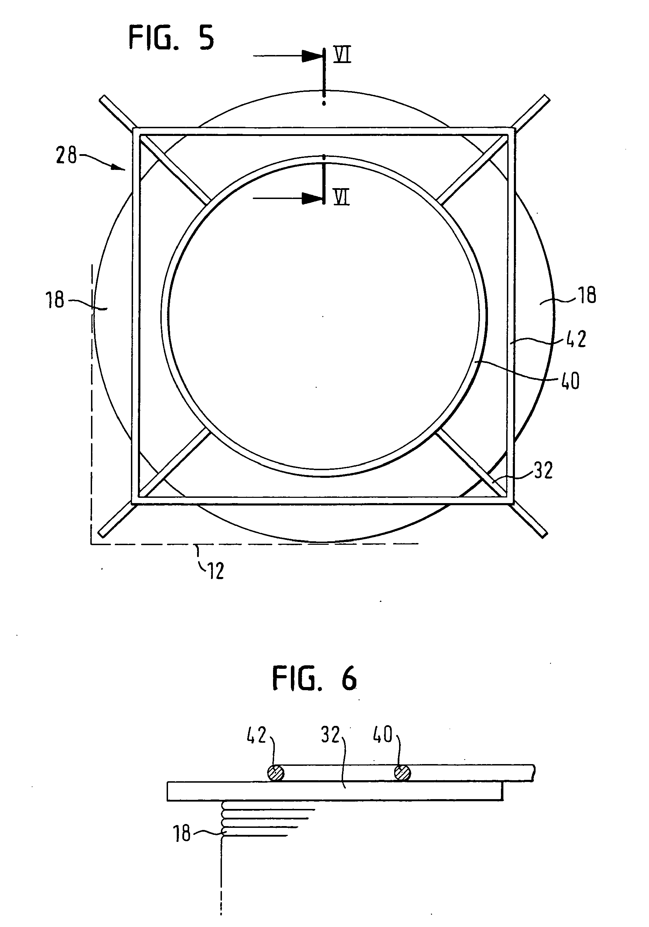

In Figures 5 and 6, retainer according to a third embodiment is shown. Here, the retainer 28 is a frame consisting of a plurality of segments. In particular, the frame consists of an inner ring 40 which is circular, an outer ring 42 which is rectangular, and four corner elements 32 which connect the inner and the outer ring and act as spacing ribs 32. The four corner elements are joined to the rings such that they form the underside of the frame, with the rings being held above the corner elements and accordingly do no contact the upper surface of the welding wire coil.

The corner elements are formed such that they protrude over the outer circumference of the welding wire coil and extend into the corners of the container, and do not protrude over the inner ring.

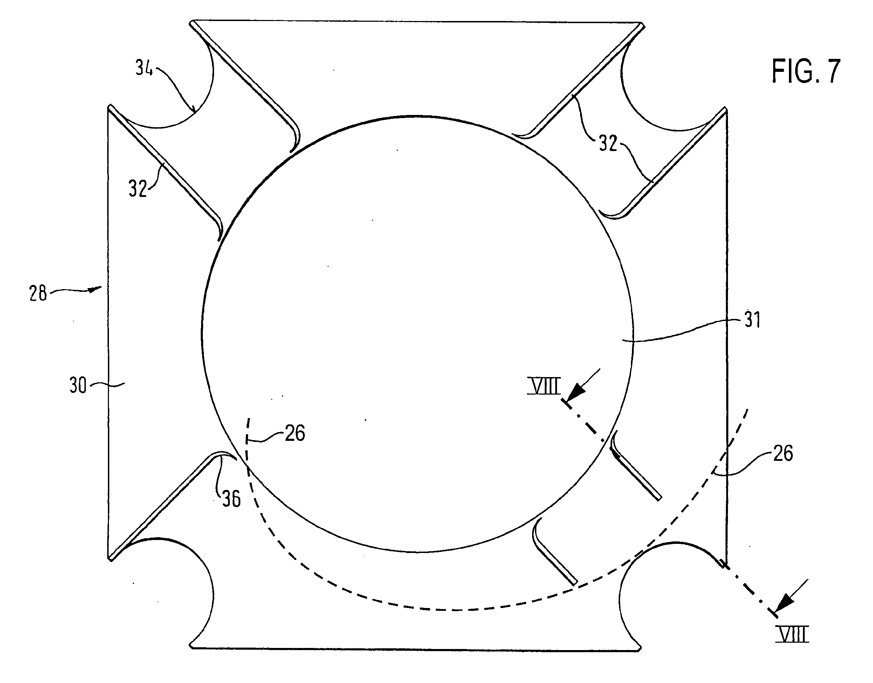

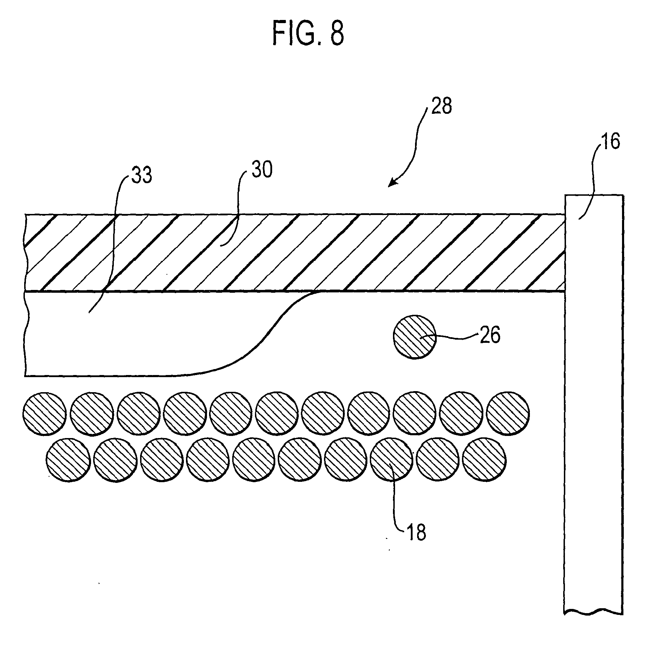

In Figures 7 and 8, a retainer according to a fourth embodiment is shown. This embodiment corresponds largely to the retainer according to the second embodiment so that only the differences will be discussed in the following.

The retainer shown in Figures 7 and 8 is used for a container as shown in Figure 1 in which the end portion 26 of the welding wire is fed from the outside of the retainer along its underside to central opening 31. In order to allow end portion 26 to approach central opening 31 in a more tangential manner as compared to the radial manner shown in Figure 1, some of the spacing elements 32 are modified. In particular, two of the ribs are formed with reduced length so as to provide shortened ribs 33 which allow the end portion of the welding wire to pass between the radially outer end of the shortened ribs and reinforcing element 16. Shortened ribs 33 are at the location at which end portion 26 first encounters spacing elements when being fed from the outside underneath the retaining element.

At the next location where the end portion encounters spacing elements on its way to the central opening of the retainer, one of the two ribs is completely removed so as to lease a single rib 32 only. This provides more space for the end portion of the welding wire for approaching the central opening in a smooth, almost tangential manner.

As can be seen in Figure 8, shortened rib 33 leaves a space above welding wire 18 and radially between the outer end of the rib and the reinforcing element 16 for end portion 26 of the welding wire. This allows the retainer to evenly contact the welding wire 18 by means of its ribs.

## Claims

1. A retainer (28) for a welding wire container, having a plate-like body (30) and at least three spacing elements (32, 33) which protrude from the body on one side so as to prevent the entire surface of the body from contacting a welding wire coil.

2. The retainer (28) of claim 1 wherein the spacing elements are in the form of ribs (32, 33) formed on the underside of the body (30).

3. The retainer (28) of claim 2 wherein the ribs (32, 33) extend straight in an approximately radial direction.

4. The retainer (28) of claim 2 or claim 3 wherein the radially inner end (36) of the ribs (32, 33) are curved.

5. The retainer (28) of claim 4 wherein the inner end is curved in the unwinding direction of the welding wire.

6. The retainer (28) according to any of claims 2 to 5 wherein the ribs (32, 33) are arranged in pairs.

7. The retainer (28) according to any of claims 2 to 6 wherein the ribs (32, 33) of each pair are approximately parallel to each other.

8. The retainer (28) of claim 6 or claim 7 wherein a cut-out (34) is provided which is adapted to engage a reinforcement element of the container, and wherein the ribs (32, 33) of each pair are arranged on either side of the cut-out (34).

9. The retainer (28) according to any of the preceding claims wherein the retainer (28) has a polygonal shape and the spacing elements (32, 33) are arranged in the vicinity of the corners of the retainer (28).

10. The retainer (28) of claim 1 wherein the spacing elements (32, 33) are defmed between recessed portions of the body.

11. The retainer (28) according to any of the preceding claims wherein at least one (33) of the spacing elements is formed with a shorter length as the remaining spacing elements (32).

12. The retainer (28) of claim 11 wherein spacing elements are provided at four locations of the retainer, with a pair of spacing elements (32) at two adjacent locations, a single spacing element (32) at a third location, and a pair of shortened spacing elements (33) being arranged at the fourth location.

13. The retainer (28) according to any of the preceding claims wherein the plate-like body (30) is made from plastic.

14. The retainer (28) of claim 13 wherein the spacing elements (32) are formed integrally with the body (30).

15. A retainer (28) for a welding wire container, having a frame formed from a plurality of segments (32, 40, 42), at least three of the segments (32) being arranged in a common plane and contacting an upper surface of a welding wire coil (18).

16. The retainer (28) of claim 15 wherein the frame is made from metal.

17. The retainer (28) of claim 15 wherein the frame is made from plastics.

18. The retainer according to any of claims 15 to 17 wherein the segments (32) which contact the welding wire coil are arranged in a radial direction.
